# EUROPEAN PATENT SPECIFICATION

(11) **EP 1 732 825 B1**
(45) Date of publication and mention of the grant of the patent: **15.07.2009**
(21) Application number: 05715140.9
(22) Date of filing: 31.03.2005
(51) Int. Cl.: B65D 77/20, B65D 43/02

(54) **A PACKAGE**
VERPACKUNG
EMBALLAGE

(30) Priority: 31.03.2004 DK 200400520; 14.06.2004 DK 200400920
(43) Date of publication of application: 20.12.2006
(73) Proprietor: Plus Pack A/S, 5260 Odense S (DK)
(72) Inventor: BRUHN, Torben Krøyer, DK-5260 Odense S (DK)
(74) Representative: Inspicos A/S
(86) International application number: PCT/DK2005/000220
(87) International publication number: WO 2005/095224

(56) References cited:
- EP-A- 1 435 330
- GB-A- 2 385 046
- US-A- 3 923 237
- US-A- 4 261 504

## Description

### Technical field

The present invention generally relates to packages, in particular to packages defined by an upper, normally domed package portion and a lower package portion, the package portions defining an enclosure for, e.g., a food product, and being sealed together, so that the package defines a closed MAP gas environment. The invention also provides package portions for such packages as well as methods of manufacture of packages and package portions.

### Background of the invention

Various packages of the above-mentioned type and packaging methods have been proposed In the prior art. One such package is disclosed in US 5,529,178 and comprises an upper, substantially rigid, domed package portion, which includes an upper flange extending away from the remainder of the domed package portion. The package further comprises a lower, substantially rigid, dished package portion having a lower flange extending outwardly from the remainder of the dished package portion. Each of the package portions includes sealing regions for sealing connection to the other package portion. There is provided an aperture located in one of the package portions for permitting selective gas escape from the package, the aperture being covered by a gas permeable plastic sheet secured to the package at a first location. The gas permeable plastic sheet is covered by a removable, gas-impermeable plastic sheet secured to the package at a location different from the first location. The package portions may, according to the description of US 5,529,178, be made from conventional plastic materials.

UK patent application No. 2 385 046, upon which the preamble of claim 1 is based, disdoses a packaging tray comprising a base portion of aluminium and a cover portion overlying the base portion and sealed in contact wit the base portion at a periphery thereof. The cover portion comprises a plastics laminate having first and second layers. The cover portion is arranged with one of the layers of the laminate in contact with, and adhered by heat-sealing to the base portion. In view of the disclosure of UK patent application No. 2 385 046, one problem solved by preferred embodiments of the present invention may be seen as how to simplify the package and its method of manufacture. German patent No. DE 2202686 discloses a method for attaching a lid of paper or cardboard to a container made from aluminium, the lid being secured to an Inwardly facing flange of the container by a thermoplastic binder or glue. Other known packages include a container made from aluminium with a thin plastic foll of a thickness of approximately 100 µm attached to an upper flange of the container by heat-sealing.

Food products, such as large meat products, including poultry, are often sold to end-consumers in aluminium containers or trays provided with a planar lid, so that the end-consumer may place the aluminium package directly into a conventional oven, once the lid has been removed from the package. Such packages do, however suffer front several disadvantages. First of all, it is usually not feasible to fit the shape of an aluminium container to the shape of, e.g., a chicken, as this would require an outwardly inclined lower portion of the tray and an inwardly inclined upper portion of the tray, i.e. an essentially rhomb-shaped package, when seen in cross-section, the manufacture of which would be too expensive for the purpose of a disposable food package. Moreover, it is difficult for end-consumers to inspect the food product In a package with a planar, transparent lid prior to purchasing the product, as the food may only be inspected through the lid and not through the sidewalls of the aluminium container. Accordingly, it is an object of embodiments of the present invention to provide packages which at least partially solve the above problems.

In order to extend the durability of the food product present in the package, it has been proposed to provide a MAP (modified atmosphere packaging) gas environment in the package, e.g. a low oxygen environment. For such an environment to be maintained in the package, the package portions need to be tightly sealed together. As disclosed in US 5,529,178, a heat seal may be provided between upper and lower package portions made from plastics. The package of US 5,529,178, however, suffers from the disadvantage that a plastic package portion is indeed not suitable for preparing the food product, e.g. a chicken, in a conventional oven at, e.g., 170 - 220 deg. C. The present inventors have found that heat-sealing of a conventional plastic package portion of a thickness sufficient for it to carry its own weight, i.e. of a thickness allowing for a dome-shape of the package portion, such as at least 250 µm, to a lower aluminium package portion is achievable. Accordingly, one aspect of the present invention is to provide packages which allow an upper plastic package portion to be heat-sealed to a lower aluminium package portion, which is suitable for entering a conventional oven for preparing the food product in the package. It is another adventage of the invention to provide a package, which is easy and cheap to manufacture.

### Description of the invention

In a first aspect, the present invention provides a package comprising:
- an upper substantially rigid domed package portion made essentially from a plastics material and defining a first flange extending outwardly from the remainder of the upper package portion along a periphery thereof;
- a lower substantially rigid package potion made essentially from aluminium;
- a heat-seal medium in a region of overlap between the upper and lower package portions, whereby the package portions are joined by heat-sealing;
   characterised in that
- the upper package portion has a thickness of at least 250 µm; and in that
- at least the remainder of the upper package portion is free of heat-seal medium.

In order to reduce manufacturing costs, the upper package portion may be made from one single layer of plastics material, preferably a thermoformable material. The layer may consist of one single material, or it may be comprise a co-extruded film of one or more plastic materials, such as low-density polyethylene (LDPE) and/or polyethylene coacrylic acid. The plastics of the upper package portion may be of the APET (amorphous polyethylene terephthalate) or the CPET (crystalline polyethylene terephthalate) type, whereby CPET may be used if a coloured, non-transparent upper package portion is desired. Alternatively, the upper package portion may be made from polyvinyl chloride (PVC) or polypropylene (PP).

The bond between the upper and lower package portions is preferably strengthened by means of a heat-seal medium, such as a heat-seal lacquer or hot melt, provided in the region of overlap between the parts. It will be appreciated that the heat-seal medium improves heat-sealing of the upper plastics package portion to the lower aluminium package portion, so that a relatively thick plastics material, i.e. having a thickness of at least 250 µm, or at least 400 µm, may be efficiently heat-sealed to an aluminium package portion.

It has been found that an aluminium surface provided with a heat-seal medium in the form of a lacquer shifts its colour Into dark grey or black when the surface is heated. Even though the lacquer is not toxic and harmless to the food contained in the package, it is desired to avoid the presence of a partially grey or black surface in the region of overlap between the upper and lower package portion, as such an appearance of the aluminium surface may create the impression to the end-consumer that the food package contains or has contained harmful substances. It has, surprisingly, been found that if the lacquer is provided on the upper plastics package portion only, the aforementioned discolouring of the aluminium package portion may be avoided or at least substantially reduced. Accordingly, the provision of a heat-seal medium on the upper plastics package portion allows for the combination of the plastic package portion of the aforementioned thickness with an aluminium package portion, allowing the food product to be prepared in the lower aluminium package portion without the need for removing the food product from the aluminium package portion, and without creating any non-desired appearance of the package to the end-consumer. Due to the provision of an aluminium package portion, in which the food product may be prepared, migration from the package to the food product can be prevented.

A hot melt may be applied as an alternative to the heat-seal lacquer. It has been found that the above-described discolouring of the aluminium package portion does not occur if the hot melt is applied to the aluminium package portion, and accordingly the hot melt may be applied to both or only one of the package portions.

The aluminium package portion may be provided with a lacquer on its outer surfaces or a part thereof to achieve a desired optical appearance of the package portion. The aluminium package portion may be manufactured by a conventional deep drawing process.

The heat-seal medium may be a lacquer, such as a polyester welding lacquer. The lacquer preferably Includes components complying with the following regulations: FDA 21 CFR 175.300, 176.170 and 176.180, for example the LPET3TF or EKP Heisssiegellack 262 which is commercially available from Hueck Folien GmbH & Co. KG, Rahning GmbH & Co. KG, Bünde, Germany or ekp Verpackungslacke GmbH, Germany. In alternative embodiments, the heat-seal medium is a hot melt which is known per se, e.g. a wax comprising methylene vinyl acetate (EVA), the hot melt-being hard at room temperature and yielding at higher temperatures. The hot melt may be applied to the package portion in its yielding state and cooled down to room temperature. Once the package portions are ready for sealing, I.e. once a food product has been enclosed in the package, the hot melt is reactivated by a heat source. Alternatively, the package portions may be sealed immediately following application of the hot melt. Application of the hot melt to the package portion may be performed at the site of the producer of the package or at the site of the producer of the food product. The hot melt may for example be a pressure sensitive hot melt on synthetic rubber basis or a hot melt on EVA polymer basis including wax and resin. Suitable hot melts are Technomelt PS 8774, which is commercially available from Henkel KGaA, Düsseldorf, Germany. A suitable alternative is GluMelt GE 805 commercially available from Gludan A/S, Herlev, Denmark.

In order to provide a region of overlap between the upper and lower package portions, the upper and/or lower package portions may be provided with flanges which define abutment surfaces for the package portions when assembled. For example, the upper package portion may define a first flange extending outwardly from the remainder of the upper package portion along a periphery thereof, the first flange overlapping a portion of the lower package portion, with the heat- seal medium being provided in the area of overlap, i.e. in the area of the first flange. The flange of the upper package portion may extend toward the interior of the package or away from the interior, i.e. towards the surroundings of the package. In order to avoid a frosted appearance of the plastic package portion, the heat-seal medium is only provided on the first flange, and the remainder of the plastic package portion Is free of heat-seal medium. This also avoids excessive consumption of heat-seal medium. Avoiding of a frosted appearance of the remainder of the plastic package portion is in particular desired when the package portion, or at least a substantial portion thereof, is transparent. In case of the heat-seal medium, preferably a hot melt, being applied to the lower package portion only, the entire upper package portion may be free of heat-seal medium.

Due to the thickness of the plastic material, i.e. at least 250 µm, or at least 400 µm, the upper package portion may be domed, as it does not collapse under its own weight. Thus, an approximately rhomb-shaped package may be provided which allows a substantial part of the food product contained in the package to be surrounded by the upper package portion, so that, in case the upper package portion is transparent, the food product may be Inspected through side walls of the upper package portion. Moreover, the amount of waste material may be minimized, as the package may be more accurately conformed to the shape of the food product than if the package was provided in the form of a tray covered by a flat lid or foil.

That surface of the upper package portion, which faces the interior of the package, or at least a portion thereof, may be adapted to provide an anti-dew effect, so as to avoid assembling of condense on an inner surface of the upper package portion which could impair visibility through the upper package portion, in case the package portion is transparent. Such an anti-dew effect may e.g. be achieve by coating the surface with a conventional anti-dew lacquer.

There may be provided one or more outwardly extending flaps on the upper and/or lower package portion for providing a grip for a user's fingers for facilitating opening of the package, i.e. separation of the upper and lower package portions. Preferably, the upper and lower package portions are separatable by peeling.

Further, one of the package portions may define a section which may be squeeze-fitted Into the other one to provide a firm fit between the package portions. The squeeze-fit section may be defined by a wall section of the upper package portion which extends Into the lower package portion. To further improve the mutual fixation of the package portions, the wall section may define protrusions, which are preferably arranged at opposed ends of the upper package portion. The wall section may be interrupted at one or more locations for facilitating flushing the interior of the package with a MAP gas, such flushing being normally performed when the upper package portion is already placed over the lower package portion, but before the final assembling of the package portions, i.e. when there is still a small gap between the package portions.

Alternatively, the upper package portion may define a peripheral collar section, into which an edge portion of the lower package portion is squeeze-fitted, in which case the flange of the upper package portion extends between a side-wall of the dome-shape upper package portion and the collar section. In order to provide a support for the upper package portion during flushing with an MAP gas, one end or side of the upper package portion may define one or more downwardly extending protrusions or wall sections for resting against an inner wall section of the lower package portion.

As described above, to facilitate removal of the upper package portion prior to consumption of the food product contained in the package portion, the upper package portion may comprise one or more outwardly extending gripping flaps. It has been found that accidental hitting of such flaps during transportation and storage of the package may loosen or even break the engagement between the upper and lower package portions. To eliminate or at least reduce this, the flap or flaps may be arranged outside the plane of the abutment surface, at which the upper package portion adheres to the lower package portion. For example, in embodiments, in which the upper package defines a collar section squeeze-fitting around an edge section of the lower package portion as described above, the gripping flap(s) may be provided at the lower edge of the collar section, i.e. below the plane of abutment between the package portions.

In a second aspect, the invention provides an upper package portion for a package according to the first aspect of the invention, the upper package portion being made from a substantially rigid plastics material and defining a first flange extending outwardly from the remainder of the upper package portion along a periphery thereof. The first flange may be coated with a heat-seal medium which Is provided only on the first flange, so that the remainder of the upper package portion is free of heat-seal medium.

All features discussed above In connection with the upper package portion of the first aspects of the invention evidently also apply to the upper package portion according to the second aspect.

In a third aspect, the invention provides a method of manufacturing a domed portion of a package, the method comprising the steps of:
- shaping a plastics material having a thickness of at least 250 µm into the form of said package portion, so that the package portion defines a first flange extending outwardly from the remainder of the package portion;
- applying a heat-seal medium to a surface of a portion of the plastics material which defines the first flange.

Thus, the domed package portion may be attached and heat-sealed to a lower package portion, e.g. an aluminium package portion, possibly without leaving grey or black spots on the surface of the aluminium package, by application of a heat-seal lacquer on the upper package portion or by application of a hot-melt on either one of the package portions. Thanks to the heat-seal medium, the relatively thick plastic material having a thickness of at least 250 µm or at least 400 µm may be efficiently heat-sealed to a lower package portion, such as an aluminium package portion. Embodiments of the method of the third aspect of the invention are applicable for manufacturing upper package portions as those described above in connection with the first and second aspects of the Invention.

The step of shaping preferably comprises forming an essentially planer sheet of the plastics material into the shape of the package portion, e.g. by pressure-assisted deep drawing and/or by thermo-form process.

In order to facilitate application of the heat-seal medium, the step of applying the medium may be performed prior to the step of shaping the sheet, in particular in case the heat-seal medium comprises a heat-seal lacquer. It may, however, be beneficial with respect to manufacturing efficiency to apply the heat-seal medium after the step of shaping the sheet, in particular in case the heat-seal medium comprises a hot melt.

A fourth aspect of the invention provides a method of manufacturing a package having an upper, substantially rigid domed package portion, and a lower package portion, the method comprising:
- shaping a plastics material having a thickness of 250-600 µm into the form of said upper package portion, so that the upper package portion defines a first flange extending outwardly from the remainder of the package portion;
- manufacturing the lower package portion, so that the lower package portion defines an abutment surface for the first flange;
- applying a heat-seal medium to a surface of a portion of the plastics material which defines the first flange or to said abutment surface;
- joining the upper and lower package portions by heat-sealing said first flange to said abutment surface.

It will be understood that the steps of manufacturing the upper package portion may be performed as a method according to the third aspect of the invention, and that the package produced may be a package according to the first aspect of the invention. Accordingly all features discussed in connection with the first, second and third aspects of the invention also apply to the method according to the fourth aspect of the invention.

### Brief description of the drawings

The invention will now be further described with reference to the drawings, in which:
Fig. 1 shows top and side views of a lower package portion;
Fig. 2 shows a perspective view of the package portion of Fig. 1;
Fig. 3 shows top and side views of an upper package portion;
Fig. 4 shows perspective views of the package portion of Fig. 3;
Figs. 5 and 6 illustrate an alternative embodiment of an upper package portion;
Fig. 7 shows a planer sheet of a plastic material, from which upper package portions as shown in Figs. 3, 5 and 6 may be manufactured.

### Detailed description of the drawings

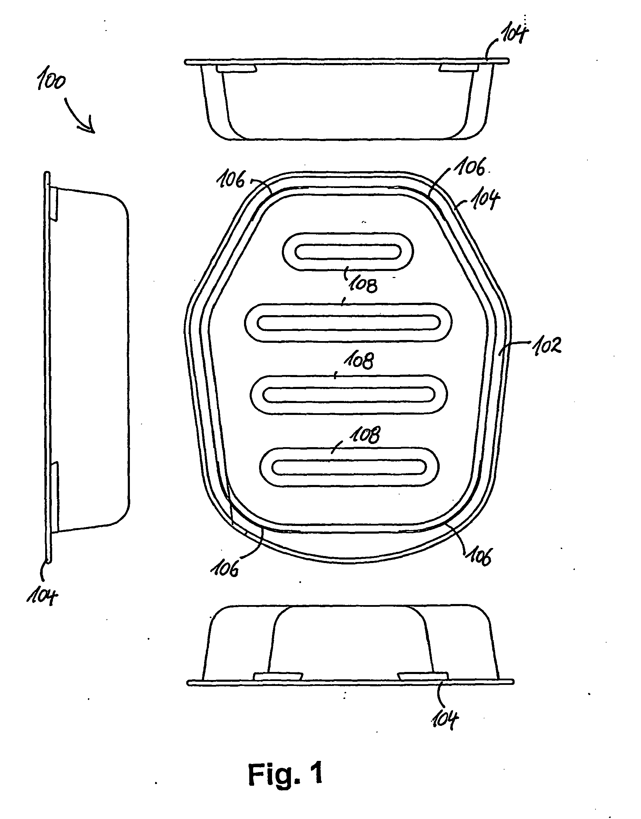

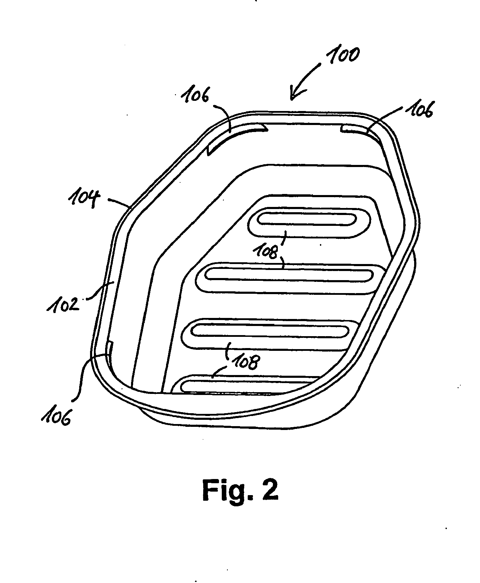

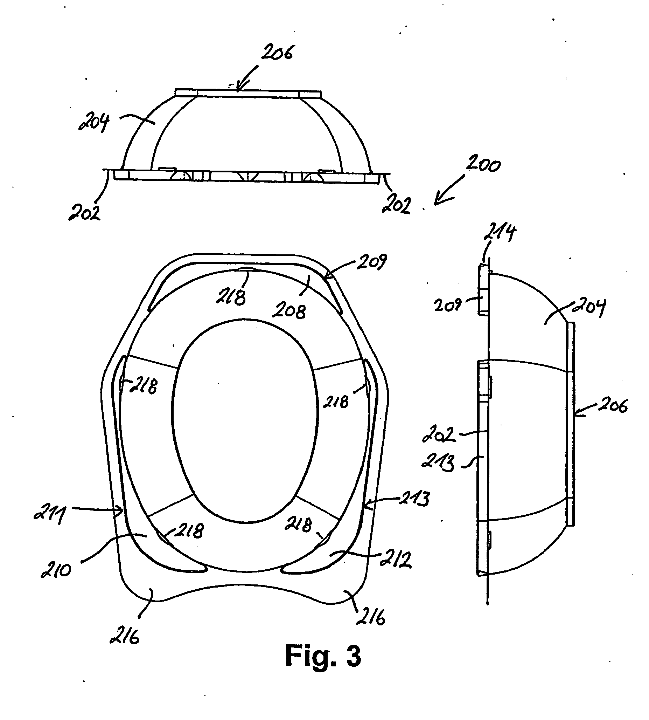

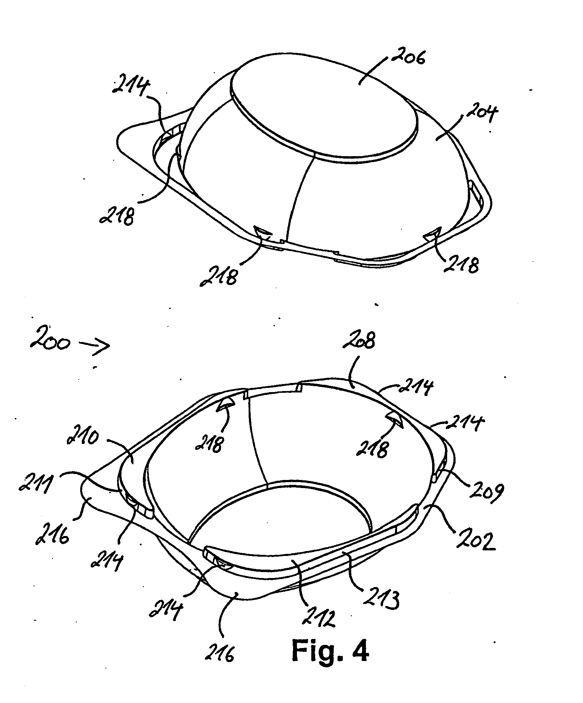

Figs. 1 and 2 show a lower package portion 100 which may be included in a package according to any aspect of the invention. The package portion, which is shaped to conform essentially to the form of a chicken, defines a flange 102 extending the periphery of the package portion 100. To round-off and stabilize the flange 102, an outmost peripheral portion of the aluminium package portion is rolled up to define an edge 104. Four Indentations 106 are provided for receiving lower wall sections 209, 211 and 213 of an upper package portion 200 (see the below description of Figs. 3 and 4). Oblong, transversely extending ribs 108 are provided for strengthening a bottom section of the package.

In Figs. 3 and 4 there is shown an upper, domed package portion 200 corresponding to the lower package portion 100 of Figs. 1 and 2. The package portion 200 is made from one single layer of plastics material and defines a peripherally extending flange 202 which, when the upper package portion 200 and the lower package portion 100 are assembled, abuts the flange portion 102 (see Figs. 1 and 2). A heat-seal medium, such as a lacquer or hot melt (not visible in Figs. 3 and 4), is applied to the flange portion 202. The domed package portion 200 is preferably essentially transparent, defining a dome 204 with a flattened top surface 206 for attachment of a print or a label (not shown). Portions 208, 210 and 212 of the upper package portion 200 extend below the flange 202, i.e. away from the flange 202 in a direction opposite to upward direction of the dome 204. The portions 208, 210 and 212 define respective wall sections 209, 211 and 213 which may be fitted, preferably squeeze-fitted, into the lower package portion 100, so that the wall sections 209, 211 and 213 rest against an inner wall of the lower package portion, with portions of the wall sections 209, 211 and 213 being received by the indentations 106 provided in the lower package portion (see Figs. 1 and 2). The portions 208, 210 and 212 are Interrupted to define interstices for facilitating flushing of the interior of the package with an MAP gas, such flushing being normally performed when the upper package portion 200 Is already placed over the lower package portion 100, but before the final assembling of the package portions, I.e. when there is still a small gap between the package portions. As shown in Figs. 3 and 4, there are provided protrusions 214 on the wall sections 209 and 211, so as to ensure a firm fit of the upper package portion 200 into the lower package portion 100.

At one end of the upper package portion 200 there is provided two flaps or grips 216 which may be gripped by a user's finger to separate the upper and lower package portions 100 and 200. A plurality of indentations 218 are provided, the purpose of which is to facilitation separation of two identical upper package portions 200 when they have been stacked for transportation and storing purposes.

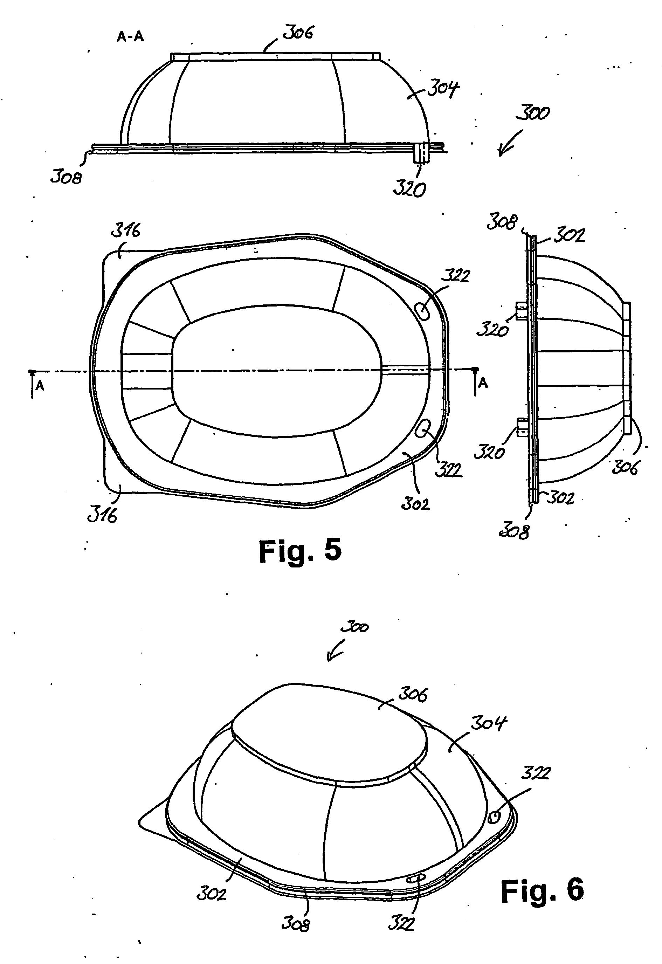

Figs. 5 and 6 Illustrate an alternative embodiment of an upper package portion 300 made from a single layer of plastics material. The package portion 300 defines flange 302 for abutting the flange 102 of lower package portion 100 depicted in Fig. 1, dome 304 and flattened top portion 306. The flange 302 interconnects dome 304 and a downwardly extending collar portion 308, into which the edge 104 of the lower package portion 100 (see Fig. 1) may be squeeze-fitted. Gripping flaps 316 are provided at the lower end of the collar 308, whereby the gripping flaps 316 extend in a plane, which is at a different level than the plane of the flange 302 to avoid that accidental force impacts on the gripping flaps break the sealing between the upper package portion to the lower package portion. Protrusions 320 allow the upper package portion to rest against an inner wall of the lower package portion during MAP gas flushing. The protrusions 320 also serve as a guide for correctly positioning the upper package portion relative to the lower package portion. The protrusions 320 are formed in the flange 302, whereby they occur as depressions 322 In the flange 302 (Fig. 6).

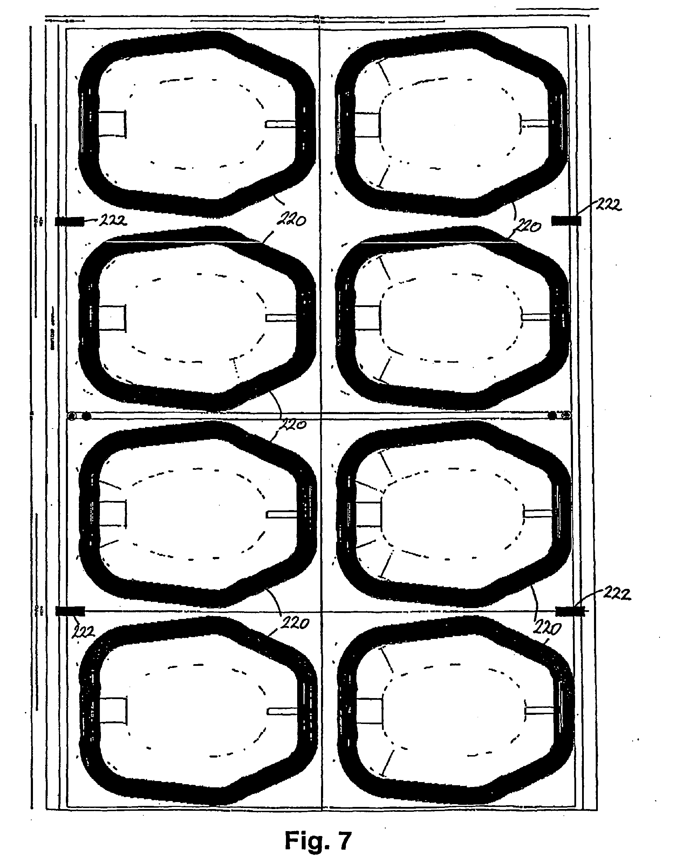

Fig. 7 Illustrates a planar sheet of a plastic foil from which the upper package portion 200 is to be manufactured. A total of 8 package portions may be formed from the sheet of Fig. 7. In case of the heat-seal medium being a heat-seal lacquer, the lacquer of the upper package portion 200 is applied to the planar sheet before the package portions 200 are formed therefrom by deep drawing, the heat-seal lacquer being visualized by the black areas 220 in Fig. 9. Though the heat-seal lacquer 220 is illustrated by black zones, it will be appreciated that the lacquer is normally provided In the form of a thin layer which results in a frosted, but still translucent appearance of that section of the plastics material to which it is applied. In case of the heat-seal medium being a hot melt, the hot melt may be applied prior to forming the package portion or after forming thereof. Optical marks 222 are provided as visual aids for the machinery completing the pressure-assisted deep-drawing process which shapes the upper package portion 200.

## Claims

1. A package comprising:
- an upper substantially rigid domed package portion (200; 300) made essentially from a plastics material and defining a first flange (202; 302) extending outwardly from the remainder of the upper package portion (200; 300) along a periphery thereof;
- a lower substantially rigid package portion (100) made essentially from aluminium;
- a heat-seal medium in a region of overlap between the upper and lower package portions,
whereby the package portions are joined by heat-sealing;
**characterised in that**
- the upper package portion (200; 300) has a thickness of at least 250 µm; and **in that**
- at least the remainder of the upper package portion (200; 300) is free of heat-seal medium.

2. A package according to claim 1, wherein the upper package portion (200; 300) is made from one single layer of said plastics material.

3. A package according to claim 1 or 2, comprising a heat-seal medium in the region of overlap.

4. A package according to claim 3, wherein the heat-seal medium is provided on the upper package portion (200; 300) only.

5. A package according to claim 3 or 4, wherein the heat-seal medium is provided on the lower package portion (100).

6. A package according to any of claims 3-5, wherein the heat-seal medium comprises a heat-seal lacquer.

7. A package according to any of claims 3-5, wherein the heat-seal medium comprises a hot melt.

8. A package according to any of claims 1-7, wherein the heat-seal medium is provided only on the first flange (202; 302).

9. A package according to any of claims 1-8, wherein the remainder of the first package portion (200; 300) is transparent.

10. A package according to any of claims 1-9, wherein that surface of the upper package portion (200; 300), which faces the interior of the package, provides an anti-dew effect.

11. A package according to any of claims 1-10, wherein the upper package portion (200; 300) comprises at least one downwardly extending protrusion (320) near its periphery, whereby the protrusion (320) defines a guide for positioning of the upper package portion relative to the lower package portion (100).

12. A package according to any of claims 1-11, wherein one of the lower and upper package portion (100; 200; 300) defines a section (209; 211; 213) which is squeeze-fitted into the other one of the upper and tower package portion (100; 200; 300).

13. A package according to claim 12, wherein the upper package portion (200; 300) defines a section (209; 211; 213) which is squeeze-fitted into the lower package portion (100).

14. A package according to claim 13, wherein said section (209; 211; 213) is defined by a wall section of the upper package portion (200; 300) which extends into the lower package portion (100), and which is provided with protrusions (214) at opposed ends of the upper package portion (200; 300).

15. A package according to claim 12, wherein an upper edge section (104) of the lower package portion (100) is squeeze-fitted into the upper package portion (200; 300).

16. A package according to claim 15, wherein said upper edge section (104) of the lower package portion (100) is squeeze-fitted into a downwardly facing collar section (308) of the upper package portion (200; 300).

17. A package according to any of the preceding claims, further comprising at least one outwardly extending gripping (216; 316) flap for facilitating separation of the upper package portion (200; 300) from the lower package portion (100).

18. A package according to claim 17, wherein the gripping flap (216; 316) is arranged in a plane different from a plane defined by the region of overlap between the upper and lower package portions (100; 200; 300).

19. A package according to claim 16 and 18, wherein the gripping flap (216; 316) extends away from a lower edge of said collar section (308).

20. An upper package portion (200; 300) for a package according to any of claims 1-19, the upper
package portion (200; 300) being made from a substantially rigid plastics material and defining a first flange (202; 302) extending outwardly from the remainder of the upper package portion along a periphery thereof;
the first flange (202; 302) being coated with a heat-sealing medium which is provided only on the first flange (202; 302), so that the remainder of the upper package portion (200; 300) is free of heat-seal medium.

21. A package portion according to claim 20, the package portion (200; 300) being made from one single layer of plastics material.

22. A method of manufacturing a domed portion (200; 300) of a package, the method comprising the steps of:
- shaping a plastics material having a thickness of at least 250 µm into the form of said package portion (200; 300), so that the package portion (200; 300) defines a first flange (202; 302) extending outwardly from the remainder of the package portion;
- applying a heat-seal medium to a surface of a portion of the plastics material which defines the first flange (202; 302).

23. A method according to claim 22, wherein the step of shaping comprises forming an essentially planer sheet of said plastics material into the shape of said package portion (200; 300).

24. A method according to claim 23, wherein step of applying said medium si performed prior to the step of shaping said sheet.

25. A method according to claim 23, wherein the step of applying said medium is performed after the step of shaping said sheet.

26. A method according to claim 24 or 25, wherein the heat-seal medium comprises a heat-seal lacquer or a hot melt.

27. A method of manufacturing a package having an upper, substantially rigid domed package portion (200; 300), and a lower package portion (100), the method comprising:
- shaping a plastics material having a thickness of 250-600 µm into the form of said upper package portion (200; 300), so that the upper package portion (200; 300) defines a first flange (202; 302) extending a outwardly from the remainder of the package portion (200; 300);
- manufacturing the lower package portion (100), so that the lower package portion defines an abutment surface (102) for the first flange (202; 302);
- applying a heat-seal medium to a surface of a portion of the plastics material which defines the first flange (202; 302);
- joining the upper and lower package portions (100; 200; 300) by heat-sealing said first flange (202; 302) to said abutment surface (102).

## Patentansprüche

1. Verpackung - mit einem oberen, im Wesentlichen steifen kuppelartigen Verpackungsteil (200; 300), der aus einem Kunststoffmaterial hergestellt und mit einem ersten Flansch (202; 302) ausgebildet ist, der sich von dem übrigen Teil des oberen Verpackungsteiles (200; 300) entlang dessen Rand nach außen erstreckt,
- mit einem unteren, im Wesentlichen steifen Verpackungsteil (100), der im Wesentlichen aus Aluminium hergestellt ist, und
- mit einem Heißklebemedium in einem Überlappbereich zwischen dem oberen Verpackungsteil und dem unteren Verpackungsteil, wobei die Verpackungsteile durch Heißkleben miteinander verbunden sind,
**dadurch gekennzeichnet, dass**
- der obere Verpackungsteil (200; 300) eine Dicke von wenigstens 250 µm aufweist und dass
- wenigstens der verbleibende Teil des oberen Verpackungsteiles (200; 300) frei von Heißklebemedium ist.

2. Verpackung nach Anspruch 1, bei der der obere Verpackungsteil (200; 300) aus einer einzigen Lage des Kunststoffmaterials hergestellt ist.

3. Verpackung nach Anspruch 1 oder 2 mit einem Heißklebemedium in dem Überlappbereich.

4. Verpackung nach Anspruch 3, bei der das Heißklebemedium nur an dem oberen Verpackungsteil (200; 300) ausgebildet ist.

5. Verpackung nach Anspruch 3 oder 4, bei der das Heißklebemedium an dem unteren Verpackungsteil (100) ausgebildet ist.

6. Verpackung nach einem der Ansprüche 3-5, bei der das Heißklebemedium einen Heißklebeauftrag aufweist.

7. Verpackung nach einem der Ansprüche 3-5, bei der das Heißklebemedium einen Schmelzklebstoff aufweist.

8. Verpackung nach einem der Ansprüche 1-7, bei der das Heißklebemedium nur an dem ersten Flansch (202; 302) ausgebildet ist.

9. Verpackung nach einem der Ansprüche 1-8, bei der der verbleibende Teil des ersten Verpackungsteiles (200; 300) transparent ist.

10. Verpackung nach einem der Ansprüche 1-9, bei der die Oberfläche des oberen Verpackungsteiles (200; 300), die auf die Innenseite der Verpackung weist, mit einem Antibeschlageffekt ausgebildet ist.

11. Verpackung nach einem der Ansprüche 1-10, bei der der obere Verpackungsteil (200; 300) nahe seines Randes über wenigstens einen sich nach unten erstreckenden Fortsatz (320) verfügt, wobei der Fortsatz (320) eine Führung zum Anordnen des oberen Verpackungsteiles in Bezug auf das untere Verpackungsteil (100) bildet.

12. Verpackung nach einem der Ansprüche 1-11, bei der entweder an dem unteren oder an dem oberen Verpackungsteil (100; 200; 300) ein Abschnitt (209; 211; 213) ausgebildet ist, der unter Verpressen mit dem jeweils anderen des oberen oder unteren Verpackungsteils (100; 200; 300) in Eingriff ist.

13. Verpackung nach Anspruch 12, bei der der obere Verpackungsteil (200; 300) mit einem Abschnitt (209; 211; 213) ausgebildet ist, der unter Verpressen mit dem unteren Verpackungsteil (100) in Eingriff ist.

14. Verpackung nach Anspruch 13, bei der der Abschnitt (209; 211; 213) durch einen Wandabschnitt des oberen Verpackungsteiles (200; 300) gebildet ist, der sich in den unteren Verpackungsteil (100) erstreckt und der an den gegenüberliegenden Enden des oberen Verpackungsteiles (200; 300) mit Vorsprüngen (214) ausgebildet ist.

15. Verpackung nach Anspruch 12, bei der ein oberer Randabschnitt (104) des unteren Verpackungsteiles (100) unter Verpressen mit dem oberen Verpackungsteils (200; 300) in Eingriff ist.

16. Verpackung nach Anspruch 15, bei der der obere Randabschnitt (104) des unteren Verpackungsteiles (100) unter Verpressen mit einem nach unten weisenden Kragenabschnitt (308) des oberen Verpackungsteiles (200; 300) in Eingriff ist.

17. Verpackung nach einem der vorangehenden Ansprüche, die weiterhin über eine sich nach außen erstreckende Grifflasche (216; 316) verfügt, um das Trennen des oberen Verpackungsteiles (200; 300) von dem unteren Verpackungsteil (100) zu erleichtern.

18. Verpackung nach Anspruch 17, bei der die Grifflasche (216; 316) in einer Ebene angeordnet ist, die von der Ebene verschieden ist, die in dem Überlappbereich zwischen dem oberen und dem unteren Verpackungsteil (100; 200; 300) ausgebildet ist.

19. Verpackung nach Anspruch 16 und 18, bei der sich die Grifflasche (216; 316) von einem unteren Rand des Kragenabschnittes (308) weg erstreckt.

20. Oberes Verpackungsteil (200; 300) für eine Verpackung nach einem der Ansprüche 1-19, wobei der obere Verpackungsteil (200; 300) aus einem im Wesentlichen steifen Kunststoffmaterial hergestellt und mit einem ersten Flansch (202; 302) ausgebildet ist, der sich von dem übrigen Teil des oberen Verpackungsteiles entlang eines Randes von ihm nach außen erstreckt, und wobei der erste Flansch (202; 302) mit einem Heißklebemedium beschichtet ist, das nur an dem ersten Flansch (202; 302) ausgebildet ist, so dass der übrige Teil des oberen Verpackungsteiles (200; 300) frei von Heißklebemedium ist.

21. Verpackungsteil nach Anspruch 20, wobei der Verpackungsteil (200; 300) aus einer einzigen Schicht eines Kunststoffmaterials hergestellt ist.

22. Verfahren zum Herstellen eines kuppelartigen Teiles (200; 300) einer Verpackung, wobei das Verfahren die Schritte
- Einformen eines Kunststoffmaterials mit einer Dicke von wenigstens 250 µm in die Form des Verpackungsteiles (200; 300) derart, dass an dem Verpackungsteil (200; 300) ein erster Flansch (202; 302) ausgebildet ist, der sich von dem übrigen Teil des Verpackungsteiles nach außen erstreckt, und
- Auftragen eines Heißklebemediums auf eine Oberfläche eines Teiles des Kunststoffmaterials aufweist, das den ersten Flansch (202; 302) bildet.

23. Verfahren nach Anspruch 22, wobei der Schritt des Einformens das Umbilden einer im Wesentlichen flachen Lage eines Kunststoffmaterials in die Gestalt des Verpackungsteiles (200; 300) aufweist.

24. Verfahren nach Anspruch 23, bei dem der Schritt des Auftragens des Mediums vor dem Schritt des Einformens der Lage durchgeführt wird.

25. Verfahren nach Anspruch 23, bei dem der Schritt des Auftragens des Mediums nach dem Schritt des Einformens der Lage durchgeführt wird.

26. Verfahren nach Anspruch 24 oder 25, bei dem das Heißklebemedium einen Heißkleberauftrag oder einen Schmelzkleber aufweist.

27. Verfahren zum Herstellen einer Verpackung mit einem oberen, im Wesentlichen steifen kuppelartigen Verpackungsteil (200; 300) und einem unteren Verpackungsteil (100), wobei das Verfahren
- Einformen eines Kunststoffmaterials mit einer Dicke von 250-600 µm in eine Form des oberen Verpackungsteiles (200; 300) derart, dass an dem oberen Verpackungsteil (200; 300) ein erster Flansch (202; 302) ausgebildet ist, der sich von dem übrigen Teil des Verpackungsteiles (200; 300) nach außen erstreckt,
- Herstellen des unteren Verpackungsteiles (100) derart, dass an dem unteren Verpackungsteil eine Anschlagfläche (102) für den ersten Flansch (202; 302) ausgebildet ist,
- Auftragen eines Heißklebermediums auf eine Oberfläche eines Abschnittes des Kunststoffmaterials, das den ersten Flansch (202; 302) bildet, und
- Verbinden der oberen und unteren Verpackungsteile (100; 200; 300) durch Heißkleben des ersten Flansches (202; 302) an der Anschlagfläche (102) aufweist.

## Revendications

1. Emballage comprenant
- une partie d'emballage supérieure en dôme sensiblement rigide (200, 300), principalement constituée de matière plastique et définissant un premier rebord (202, 302) qui s'étire vers l'extérieur depuis le reste de la partie d'emballage supérieure (200, 300) suivant sa périphérie ;
- une partie d'emballage inférieure sensiblement rigide (100) principalement constituée d'aluminium ;
- un agent de thermoscellage situé au niveau de la zone de recouvrement entre les parties d'emballage supérieure et inférieure, de manière à les assembler par thermoscellage ;
**caractérisé en ce que** :
- la partie d'emballage supérieure (200, 300) présente une épaisseur d'au moins 250 µm ; et **en ce que**
- le reste au moins de la partie d'emballage supérieure (200, 300) est exempt d'agent de thermoscellage.

2. Emballage selon la revendication 1, dans lequel la partie d'emballage supérieure (200, 300) est constituée d'une seule couche de ladite matière plastique.

3. Emballage selon la revendication 1 ou 2, comprenant un agent de thermoscellage dans la zone de recouvrement.

4. Emballage selon la revendication 3, dans lequel l'agent de thermoscellage est prévu sur la seule partie d'emballage supérieure (200, 300).

5. Emballage selon la revendication 3 ou 4, dans lequel l'agent de thermoscellage est prévu sur la partie d'emballage inférieure (100).

6. Emballage selon l'une quelconque des revendications 3 à 5, dans lequel l'agent de thermoscellage comprend un vernis de thermoscellage.

7. Emballage selon l'une quelconque des revendications 3 à 5, dans lequel l'agent de thermoscellage comprend un matériau thermofusible.

8. Emballage selon l'une quelconque des revendications 1 à 7, dans lequel l'agent de thermoscellage est prévu uniquement sur le premier rebord (202, 302).

9. Emballage selon l'une quelconque des revendications 1 à 8, dans lequel le reste de la première partie d'emballage (200, 300) est transparent.

10. Emballage selon l'une quelconque des revendications 1 à 9, dans lequel la partie d'emballage supérieure (200, 300) qui est tournée vers l'intérieur de l'emballage assure un effet anti-condensation.

11. Emballage selon l'une quelconque des revendications 1 à 10, dans lequel la partie d'emballage supérieure (200, 300) comprend au moins une protubérance (320) s'étirant vers le bas, près de sa périphérie, la protubérance (320) définissant un guide de positionnement de la partie d'emballage supérieure par rapport à la partie d'emballage inférieure (100).

12. Emballage selon l'une quelconque des revendications 1 à 11, dans lequel l'une des parties d'emballage inférieure et supérieure (100, 200, 300) définit une section (209, 211, 213) qui s'encastre par compression dans l'autre des parties d'emballage supérieure et inférieure (100, 200, 300).

13. Emballage selon la revendication 12, dans lequel la partie d'emballage supérieure (200, 300) définit une section (209, 211, 213) qui s'encastre par compression dans la partie d'emballage inférieure (100).

14. Emballage selon la revendication 13, dans lequel ladite section (209, 211, 213) est définie par une section de paroi de la partie d'emballage supérieure (200, 300) qui s'étire dans la partie d'emballage inférieure (100), et qui est dotée de protubérances (214) aux extrémités opposées de la partie d'emballage supérieure (200, 300).

15. Emballage selon la revendication 12, dans lequel une section de bord supérieur (104) de la partie d'emballage inférieure (100) s'encastre par compression dans la partie d'emballage supérieure (200, 300).

16. Emballage selon la revendication 15, dans lequel ladite section de bord supérieur (104) de la partie d'emballage inférieure (100) s'encastre par compression dans une section en collerette (308), tournée vers le bas, de la partie d'emballage supérieure (200, 300).

17. Emballage selon l'une quelconque des revendications précédentes, comprenant en outre au moins languette de préhension (216, 316) s'étirant vers l'extérieur, afin séparer plus facilement la partie d'emballage supérieure (200, 300) de la partie d'emballage inférieure (100).

18. Emballage selon la revendication 17, dans lequel la languette de préhension (216, 316) est disposée dans un plan différent du plan défini par la zone de recouvrement entre les parties supérieure et inférieure d'emballage (100, 200, 300).

19. Emballage selon les revendications 16 et 18, dans lequel la languette de préhension (216, 316) s'étire à distance d'un bord inférieur de ladite section en collerette (308).

20. Partie d'emballage supérieure (200, 300) pour un emballage selon l'une quelconque des revendications 1 à 19, la partie d'emballage supérieure (200, 300) étant constituée d'une matière plastique sensiblement rigide et définissant un premier rebord (202, 302) qui s'étire vers l'extérieur depuis le reste de la partie d'emballage supérieure, suivant sa périphérie ;
le premier rebord (202, 302) étant enduit d'un agent de thermoscellage prévu uniquement sur le premier rebord (202, 302), de sorte que le reste de la partie d'emballage supérieure (200, 300) soit exempt d'agent de thermoscellage.

21. Emballage selon la revendication 20, la partie d'emballage (200, 300) étant constituée d'une seule couche de matière plastique.

22. Procédé de fabrication d'une partie en dôme (200, 300) d'un emballage, le procédé comprenant les étapes consistant à :
- façonner une matière plastique d'une épaisseur d'au moins 250 µm afin de lui donner la forme de ladite partie d'emballage (200, 300), de sorte que celle-ci définisse un premier rebord (202, 302) s'étirant vers l'extérieur depuis le reste de la partie d'emballage ;
- appliquer un agent de thermoscellage sur une surface d'une partie de la matière plastique qui définit le premier rebord (202, 302).

23. Procédé selon la revendication 22, dans lequel l'étape de façonnage consiste à donner à une feuille sensiblement plane de ladite matière plastique la forme de ladite partie d'emballage (200, 300).

24. Procédé selon la revendication 23, dans lequel l'étape d'application dudit agent est effectuée avant l'étape de façonnage de ladite feuille.

25. Procédé selon la revendication 23, dans lequel l'étape d'application dudit agent est effectuée après l'étape de façonnage de ladite feuille.

26. Emballage selon la revendication 24 ou 25, dans lequel l'agent de thermoscellage comprend un vernis de thermoscellage ou un produit thermofusible.

27. Procédé de fabrication d'un emballage ayant une partie d'emballage supérieure en dôme sensiblement rigide (200, 300), et une partie d'emballage inférieure (100), le procédé consistant à :
- façonner une matière plastique d'une épaisseur de 250 à 600 µm afin de lui donner la forme de ladite partie d'emballage supérieure (200, 300), de sorte que celle-ci définisse un premier rebord (202, 302) s'étirant vers l'extérieur depuis le reste de la partie d'emballage (200, 300) ;
- fabriquer la partie d'emballage inférieure (100) de sorte que celle-ci définisse une surface de butée (102) pour le premier rebord (202, 302) ;
- appliquer un agent de thermoscellage sur une surface d'une partie de la matière plastique qui définit le premier rebord (202, 302) ;
- assembler les parties d'emballage supérieure et inférieure (100, 200, 300) en thermoscellant ledit premier rebord (202, 302) à ladite surface de butée (102).
